**Europäisches Patentamt**

**European Patent Office**

**Office européen des brevets**

(19)

(11) Veröffentlichungsnummer: **0 313 829 B1**

(12) **EUROPÄISCHE PATENTSCHRIFT**

(45) Veröffentlichungstag der Patentschrift:
15.05.91 Patentblatt 91/20

(51) Int. Cl.⁵: **F16L 3/02, F16L 43/00, F24D 19/02**

(21) Anmeldenummer: **88115748.1**

(22) Anmeldetag: **24.09.88**

(54) **Führungselement für ein Rohr aus Kunststoff, Verwendung desselben und Verfahren zum Verlegen eines Heizungsrohres.**

(30) Priorität: **29.10.87 CH 4237/87**

(43) Veröffentlichungstag der Anmeldung:
**03.05.89 Patentblatt 89/18**

(45) Bekanntmachung des Hinweises auf die Patenterteilung:
**15.05.91 Patentblatt 91/20**

(84) Benannte Vertragsstaaten:
**AT BE DE FR IT NL**

(56) Entgegenhaltungen:
**CH-A- 598 527**
**DE-A- 3 326 223**

(56) Entgegenhaltungen:
**GB-A- 2 173 275**
**US-A- 3 897 923**
**PROSPEKT - HEIZUNGSTECHNIK**
**"VIEGATHERM" - SYSTEM der FIRMA VIEGA**

(73) Patentinhaber: **Werner, Beat E.**
**Zipfelstrasse 11**
**CH-8302 Kloten (CH)**

(72) Erfinder: **Werner, Beat E.**
**Zipfelstrasse 11**
**CH-8302 Kloten (CH)**

(74) Vertreter: **Patentanwälte Schaad, Balass & Partner**
**Dufourstrasse 101 Postfach**
**CH-8034 Zürich (CH)**

## Beschreibung

Die vorliegende Erfindung betrifft ein Führungselement gemäss dem Oberbegriff des Anspruchs 1 und ein Verfahren zum Verlegen eines flexiblen Heizungsrohres aus Kunststoff unter Verwendung eines Führungselementes.

Es ist z.B. aus dem Prospekt – Heizungstechnik Viegatherm"-System für Heizkörper-Anlagen, Anschluss-Garnituren und Zubehör – der Firma Viega, D-5952 Attendorn, ein Führungselement bekannt, bei welchem das flexible Heizungsrohr im Bereich der Krümmung in einem Halteelement und zwischen dem Halteelement und dem Heizkörperventil in einer separaten, geraden Schutz-Manschette geführt ist. Dieses Halteelement besteht aus Kunststoff und bildet im wesentlichen einen nach unten offenen, seitlich abgeflachten Hohlkörper, der einen nach oben abstehenden, rohrförmigen Ansatz aufweist. Ein zweiter nach unten offener Ansatz ist rechtwinklig zum ersten Ansatz gerichtet und erstreckt sich in Richtung des abgeflachten Halteelementes. Zwischen den beiden Ansätzen weist das Halteelement eine, diese verbindende Krümmung auf, an der das beim Verlegen durch die untenliegende Öffnung und durch den ersten Ansatz geschobene Heizungsrohr beim Umbiegen und Einlegen in den zweiten Ansatz zur Anlage kommt. Das Heizungsrohr wird mit einem Haltering im freien Endbereich des zweiten Ansatzes an diesem fixiert und zusammen mit dem Halteelement auf dem Boden befestigt. Anschliessend wird das freie Ende des Heizungsrohres an das Heizkörperventil angeschlossen und die der Länge nach aufgeschlitzte Schutz-Manschette um den noch freiliegenden Teil des Heizungsrohres zwischen dem Halteelement und dem Heizkörperventil gelegt. Solche Führungselemente sind kompliziert im Aufbau und insbesondere aufwendig bei der Montage. Überdies benötigen die Halteelemente viel Platz, so dass es bei einer üblichen Dicke des Unterlagbodens von ca. 0,07 m aus der Bodenkonstruktion herausragen. Die Schutz-Manschetten müssen aus einem elastischen Kunststoff aufgebaut sein, damit sie nachträglich um das Heizungsrohr gelegt werden können.

Weiter ist aus der DE-A-3 326 223 eine Halterung zum Fixieren einer Rohrschleife einer Fussbodenheizung bekannt. Diese flach auf dem Boden zu liegen kommende Halterung weist ein um ungefähr 180° gekrümmtes, im Querschnitt kreisförmiges gegen oben offenes Halteelement auf, dessen aussenliegender Schenkel bereichsweise ausgebrochen ist und in den nicht ausgebrochenen Bereichen zusammen mit dem innen liegenden Schenkel nach oben offene Klemmstücke bildet, in welche die Rohrschlaufe einschnappbar ist.

Es ist daher Aufgabe der vorliegenden Erfindung, ein Führungselement für ein flexibles Rohr aus Kunststoff vorzuschlagen, welches einfach aufgebaut ist, wenig Platz benötigt und eine einfache und zeitsparende Montage des Rohres ermöglicht.

Diese Aufgabe wird durch die Merkmale des kennzeichnenden Teiles des Anspruches 1 gelöst.

In einer bevorzugten Ausführungsform weist der aussenliegende Schenkel im, vom Schutzrohr entfernten Endbereich einen, sich in Rohrumfangsrichtung erstreckend vorstehenden Haltelappen auf. Dieser gibt dem Rohr aus Kunststoff einen sicheren Halt im Halteelement und vergrössert die Umschliessung des Rohres.

Das Führungselement eignet sich insbesondere zum Führen eines flexiblen, in einem Boden oder einer Wand verlegten, und unter Biegung zu einem Anschlusselement, vorzugsweise einem Heizkörperventil geführten Heizungsrohres aus Kunststoff im Bereich dessen Krümmung im Boden bzw. der Wand und dem anschliessenden, sich bis zum Anschlusselement erstreckenden, geradlinigen Bereich. Da das Führungselement einstückig ausgebildet ist, benötigt es sehr wenig Platz, so dass bei üblichen Dicken des Unterlagsbodens das Halteelement ganz in den Unterlagsboden zu liegen kommt, und das Heizungsrohr gerade zum Heizkörperventil geführt werden kann. Dies ermöglicht auch bei dünnen Bodenkonstruktionen eine saubere, gerade Führung des Heizungsrohres.

In einem bevorzugten Verfahren zum Verlegen eines flexiblen Heizungsrohres aus Kunststoff unter Verwendung von einem Führungselement wird wie folgt vorgegangen : Das Schutzrohr des Führungselementes wird auf die notwendige Länge gekürzt. Anschliessend wird das Heizungsrohr vom Halteelement her durch das Schutzrohr hindurchgestossen und mit einem Anschlusselement, beispielsweise dem Heizkörperventil, gekoppelt und darnach wird das Heizungsrohr gebogen und in das Halteelement eingelegt. Das Verlegen des Heizungsrohres kann sehr schnell erfolgen und resultiert in einer sauberen Führung des Heizungsrohres.

Im folgenden wird ein Ausführungsbeispiel des Erfindungsgegenstandes anhand der Zeichnung näher erläutert.

Es zeigen rein schematisch :

Die Fig. 1-3 in Draufsicht, Ansicht und Seitenansicht ein Führungselement mit einem darin eingelegten strichpunktiert dargestellten Heizungsrohr,

Fig. 4 einen Schnitt entlang der Linie IV-IV der Fig. 3, und

Fig. 5 ein Teil einer Heizungsinstallation, bei der das Führungselement verwendet ist.

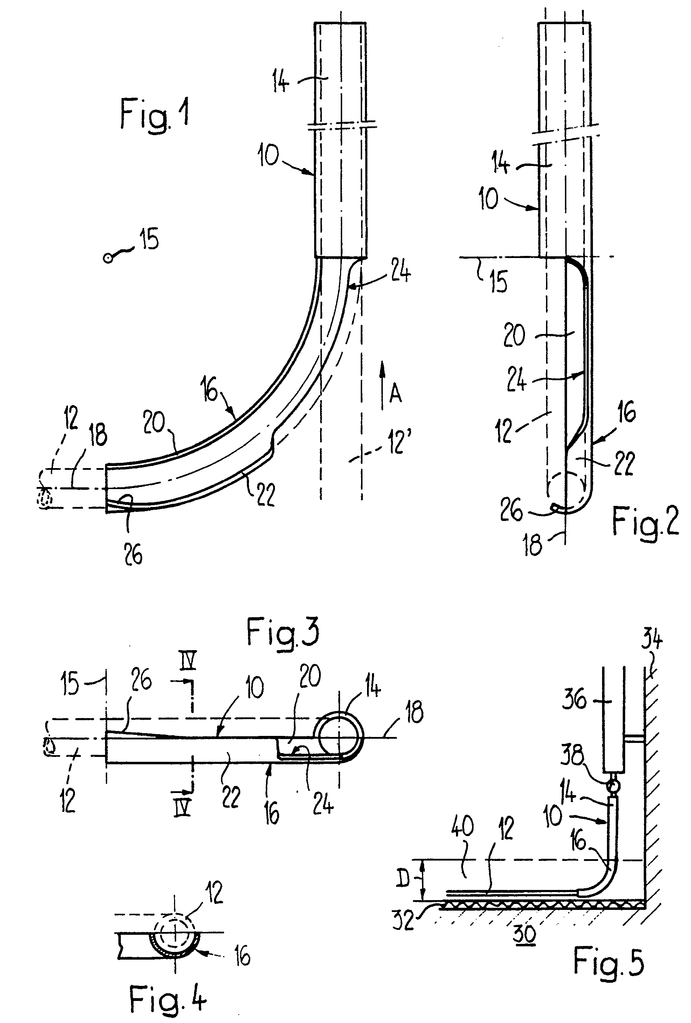

In den Figuren 1 bis 4 ist das Führungselement mit 10 und das darin eingelegte, gestrichelt dargestellte Heizungsrohr aus Kunststoff mit 12 bezeichnet. Das Führungselement weist ein gerades Schutzrohr 14 und ein, um eine Biegeachse 15 gebogenes Halteelement 16 auf. Es ist aus einem Aluminiumrohr geformt, das an einem Ende um 90° um die Biegeachse 15 abgebogen ist. Das Aluminiumrohr ist im Bereich des Halteelementes 16 in der Krümmungsebene, in welcher die Längsachse 18 des Schutzrohres 14 sowie des Halteelementes 16 liegt und zu welcher die Achse 15 eine Normale bildet, aufgeschnitten und, wie in den Figuren 1-4 dargestellt, ist die obere Hälfte abgetrennt, so dass das Halteelement 16 ein quer zur Krümmung offenes, gebogenes U-Profil bildet. Das U-Profil und somit das Halteelement 16 ist in einer Richtung parallel zur Biegeachse 15 offen. Das Halteelement 16 weist bezüglich der Längsachse 18 einen, in radialer Richtung der Krümmung des Halteelementes 16 gesehen, innenliegenden Schenkel 20 und einen aussenliegenden Schenkel 22 auf. Der aussenliegende Schenkel 22 ist in dem, an das Schutzrohr 14 angrenzenden Bereich mit einer Ausnehmung 24 versehen, die derart bemessen ist, dass das gerade mit 12' bezeichnete Heizungsrohr in Pfeilrichtung A durch das Schutzrohr 14 geschoben werden kann (s. insbesondere Fig. 1). Am aussenliegenden Schenkel 22 ist ebenfalls im, vom Schutzrohr 14 entfernten Endbereich ein sich im Heizungsrohrumfangsrichtung erstrekkend vorstehender Haltelappen 26 angeordnet, der zusammen mit den beiden Schenkeln 20 und 22 das Heizungsrohr 12 um mehr als 180° umfasst.

Das Heizungsrohr 12 wird folgendermassen in das Führungselement 10 eingebracht. Das Heizungsrohr 12' wird in Pfeilrichtung A durch die Ausnehmung 24 in das Schutzrohr 14 eingeführt und in genügendem Masse durch dieses hindurchgestossen. Anschliessend wird das Heizungsrohr 12' gebogen und in der mit 12 bezeichneten Lage in das Halteelement 16 eingelegt. Die beiden Schenkel 20 und 22 halten das Heizungsrohr in einer gleichförmigen Krümmung, und der Haltelappen 26 verhindert ein Herausspringen des Heizungsrohres aus dem Halteelement 16.

Durch die Führung des Heizungsrohres 12 im Halteelement 16 lassen sich Krümmungen mit sehr kleinen Radien erreichen, was zur Folge hat, dass für das Halteelement 16 wenig Platz benötigt wird. Das flexible Heizungsrohr aus Kunststoff wird in der Krümmung gehalten, so dass es nicht in die gerade Ursprungsform zurückfedern kann. Ueberdies ist, wie oben gezeigt, die Montage sehr vereinfacht, weil das Führungselement einstückig ausgebildet ist.

Die Ausnehmung 24 im Schenkel 22 kann kleiner ausgebildet sein als dies in den Figuren 1-3 dargestellt ist. Es muss nur die Bedingung erfüllt sein, dass das Heizungsrohr 12' problemlos in Pfeilrichtung A in das Schutzrohr 14 eingeführt werden kann. Es ist auch einzusehen, dass das Halteelement 16 am, vom Schutzrohr 14 entfernten Endbereich in gerader Richtung weitergeführt werden kann, und dass auch Bögen mit mehr oder weniger als 90° ausgeführt werden können.

In der Fig. 5 ist ein Teil einer Heizungsinstallation dargestellt, in der ein Führungselement 10 verwendet ist. Auf einem Boden 30, beispielsweise aus Beton, ist eine Isoliermatte 32 verlegt. Auf der Isoliermatte 32 ist das Heizungsrohr 12 in den Bereich senkrecht unter einem an einer Wand 34 befestigten Heizkörper 36 geführt. Im Bereich zwischen der Isoliermatte 32 und einem am Heizkörper 36 angeordneten Heizkörperventil 38 wird das Heizungsrohr 12 von einem Führungselement 10 gehalten. Das auf der Isoliermatte 32 verlegte Heizungsrohr 12 und das Halteelement 16 des Führungselementes 10 sind von einem gestrichelt dargestellten Unterlagsboden 40 überdeckt. Die Dicke des Unterlagsbodens 40 ist mit D bezeichnet und beträgt üblicherweise 0,07 m. Wie aus der Fig. 5 ersichtlich ist, ist das gesamte Halteelement 16 im Unterlagsboden 40 angeordnet, und das Schutzrohr 14 führt das Heizungsrohr 12 gerade ausgerichtet zum Heizkörperventil 38.

Das flexible Heizungsrohr 12 aus Kunststoff wird wie folgt verlegt : Zuerst wird das Schutzrohr 14 des Führungselementes 10 auf die gewünschte Länge zugeschnitten. Anschliessend wird das freie Ende des Heizungsrohres 12 vom Halteelement 16 her in das Schutzrohr 14 eingeführt und durch dieses hindurchgestossen, wie dies weiter oben beschrieben ist. Darnach wird das Heizungsrohr 12 an das Heizkörperventil 38 angeschlossen, das Führungselement 10 nachgestossen, sofern nötig, und das Heizungsrohr 12 im Bereich des Halteelementes 16 gebogen und in dieses eingelegt.

Das Verlegen des Heizungsrohres 12 kann mit Hilfe des einstückigen Führungselementes 10 in sehr kurzer Zeit und auf einfache Art und Weise erfolgen. Es ist selbstverständlich, dass das Führungselement 10 auch für die Führung von Heizungsrohren 12 aus der Wand 34 zum Heizkörperventil 38 eingesetzt werden kann. Der Vollständigkeit halber soll hier noch erwähnt werden, dass auch andere, flexible Rohre aus Kunststoff mittels dem Führungselement 10 selbsthaltend in Krümmungen geführt werden können. Die flexiblen Rohre sind im Schutzrohr 14 auf der ganzen Länge geschützt, und im Schutzrohr 14 sowie im Halteelement 16 sauber und formstabil geführt.

Das weiter oben beschriebene Führungselement 10 besteht aus Aluminium. Es kann aber auch aus einem anderen Metall oder aus einem geeigneten Kunststoff bestehen.

Der Querschnitt des Schutzrohres 14 kann eine beliebige, z.B. quadratische, Form aufweisen ; der Querschnitt des Halteelementes 16 entspräche dann dem halben Querschnitt des Schutzrohres 14, beispielsweise einem U mit geraden Schenkeln.

Die Höhe der Schenkel 20, 22 kann von der halben Höhe des Schutzrohres 14 abweichen, sie können auch weitere Ausnehmungen oder Vorsprünge aufweisen, wichtig ist, dass sie dem Rohr 12 einen sicheren Halt geben.

## Ansprüche

1. Führungselement zum Führen eines in einem Boden oder einer Wand zu verlegenden und unter Biegung zu einem Anschlusselement, insbesondere einem Heizkörperventil zu führenden flexiblen Rohr, insbesondere Heizugsrohr, aus Kunststoff, mit einem einseitig offenen, um eine Biegeachse (15) gekrümmten Halteelement (16) zum Führen des Rohres (12) im Bereich dessen Krümmung im Boden (30, 32, 40) oder in der Wand (34) und einem geraden Schutzelement (14) zum Führen des Rohres (12) im an die Krümmung anschliessenden sich bis etwa zum Anschlusselement erstreckenden Bereich, dadurch gekennzeichnet, dass das Schutzelement ein einstückig am Halteelement (16) angeordnetes Schutzrohr (14) ist, das Halteelement (16) einen U-förmigen, im wesentlichen in einer Richtung parallel zur Biegeachse (15) offenen Querschnitt aufweist, und der aussenliegende Schenkel (22) des Halteelementes (16) im Anschlussbereich an das Schutzrohr (14) eine Ausnehmung (24) aufweist, die derart ausgebildet ist, dass das Rohr (12') im wesentlichen in gerader Verlängerung des Schutzrohres (14) in dieses einführbar ist.

2. Führungselement nach Anspruch 1, dadurch gekennzeichnet, dass der aussenliegende Schenkel (22) im vom Schutzrohr (14) entfernten Endbereich einen sich in Rohrumfangsrichtung erstreckenden vorstehenden Haltelappen (26) aufweist.

3. Führungselement nach Anspruch 1 oder 2, dadurch gekennzeichnet, dass es aus Metall, vorzugsweise aus Aluminium besteht.

4. Führungselement nach Anspruch 1 oder 2, dadurch gekennzeichnet, dass es aus Kunststoff besteht.

5. Verfahren zum Verlegen eines flexiblen Heizugsrohres aus Kunststoff, unter Verwendung eines Führungselementes (10) nach einem der Ansprüche 1 bis 4, dadurch gekennzeichnet, dass das Schutzrohr (14) des Führungselementes (10) auf die notwendige Länge gekürzt wird, das Heizungsrohr (12') vom Halteelement (16) her durch das Schutzrohr (14) hindurchgestossen und mit dem Anschlusselement (38) gekoppelt wird, und dass vorzugsweise anschliessend das Heizungsrohr (12) gebogen und in das Halteelement (16) eingelegt wird.

## Claims

1. Guide element for guiding a flexible pipe, particularly a heating pipe, of plastics material, which is to be laid in a floor or a wall and guided in a bend to a connection element, particularly a radiator valve, said guide element comprising a holding element (16) open on one side and curved about a bending axis (15) for guiding the pipe (12), in the region of its curvature, in the floor (30, 32, 40) or in the wall (34), and comprising a straight protective element (14) for guiding the pipe (12) in the region adjoining the curvature and extending approximately to the connection element, characterised in that the protective element is a protective tube (14) disposed on the holding element (16) to form a single piece, the holding element (16) has a U-shaped cross-section which is open substantially in a direction parallel to the bending axis (15), and the exterior limb (22) of the holding element (16) has in the region connected to the protective tube (14) a recess (24) which is so formed that the pipe (12') can be inserted into the protective tube (14) substantially as a straight extension of the latter.

2. Guide element according to Claim 1, characterised in that the exterior limb (22) is provided in the end region remote from the protective tube (14) with a projecting holding tongue (26) extending in the peripheral direction of the pipe.

3. Guide element according to Claim 1 or 2, characterised in that it is made of metal, particularly aluminium.

4. Guide element according to Claim 1 or 2, characterised in that it is made of plastics material.

5. Method of laying a flexible heating pipe of plastics material with the aid of a guide element (10) according to one of Claims 1 to 4, characterised in that the protective tube (14) of the guide element (10) is shortened to the required length, the heating pipe (12') is pushed through the protective tube (14) from the holding element (16) and coupled to the connection element (38), and in that preferably thereupon the heating pipe (12) is bent and inserted into the holding element (16).

## Revendications

1. Elément de guidage destiné à guider un tube flexible, en particulier un tube de chauffage en matière plastique, à poser dans un sol (30, 32, 40) ou un mur (34) et conduisant, sous flexion, vers un élément de raccordement, en particulier une vanne de radiateur, comportant un élément support (16) ouvert d'un côté, coudé autour d'un axe de flexion (15) afin de guider le tube (12) au voisinage de ce coude dans le sol (30, 32, 40) ou dans le mur (34), et un élément de protection rectiligne (14) pour guider le tube (12) dans la zone adjacente à ce coude et allant jusqu'à l'élément de raccordement, caractérisé par le fait que l'élément de protection est un tube protecteur (14) disposé en une seule pièce sur l'élément support (16), que l'élément de support (16) présente une section en forme d'U ouverte dans une direction sensiblement parallèle à l'axe de flexion(15), et que la branche extérieure (22) de l'élément support (16) présente dans la zone de raccordement au tube protecteur (14) un évidement (24) qui est réalisé de telle sorte que le tube (12′) puisse être introduit dans le tube protecteur (14) en constituant une prolongation sensiblement rectiligne de ce dernier.

2. Elément de guidage selon la revendication 1, caractérisé par le fait que la branche extérieure (22) présente, dans une zone d'extrémité éloignée du tube protecteur (14), une patte de maintien (26) qui fait saillie et s'étend dans le sens périphérique du tube.

3. Elément de guidage selon la revendication 1 ou 2, caractérisé par le fait que ledit élément est constitué en métal, de préférence en aluminium.

4. Elément de guidage selon la revendication 1 ou 2, caractérisé par le fait que ledit élément est constitué en matière plastique.

5. Procédé pour la pose d'un tube de chauffage flexible en matière plastique, avec utilisation d'un élément de guidage (10) selon l'une des revendications 1 à 4, caractérisé par le fait que le tube protecteur (14) de l'élément de guidage (10) est raccourci pour présenter la longueur nécessaire, que le tube de chauffage (12′) venant de l'élément support (16) est introduit à travers le tube protecteur (14) et accouplé à l'élément de raccordement (38) et que la flexion du tube de chauffage (12) et son introduction dans l'élément de support (16) s'effectuent de préférence immédiatement après.

Fig. 1

Fig. 2

Fig. 3

Fig. 4

Fig. 5